(19) Europäisches Patentamt
European Patent Office
Office européen des brevets

(11) **EP 1 025 133 B1**

(12) **EUROPÄISCHE PATENTSCHRIFT**

(45) Veröffentlichungstag und Bekanntmachung des Hinweises auf die Patenterteilung:
**02.04.2003 Patentblatt 2003/14**

(51) Int Cl.[7]: **C08F 2/48**, C08F 220/34, C08F 220/54, C02F 1/56, D21H 17/45

(21) Anmeldenummer: **98952664.5**

(22) Anmeldetag: **29.09.1998**

(86) Internationale Anmeldenummer:
**PCT/EP98/06179**

(87) Internationale Veröffentlichungsnummer:
**WO 99/023120 (14.05.1999 Gazette 1999/19)**

(54) **VERFAHREN ZUR HERSTELLUNG KATIONISCHER POLYELEKTROLYTE**

METHOD FOR PRODUCING CATIONIC POLYELECTROLYTES

PROCEDE PERMETTANT DE FABRIQUER DES POLYELECTROLYTES CATIONIQUES

(84) Benannte Vertragsstaaten:
**AT BE CH DE DK ES FI FR GB GR IE IT LI NL PT SE**

(30) Priorität: **31.10.1997 DE 19748153**

(43) Veröffentlichungstag der Anmeldung:
**09.08.2000 Patentblatt 2000/32**

(73) Patentinhaber: **Stockhausen GmbH & Co. KG 47705 Krefeld (DE)**

(72) Erfinder: **BREHM, Helmut D-47800 Krefeld (DE)**

(56) Entgegenhaltungen:
**US-A- 3 912 607       US-A- 3 948 740**
**US-A- 4 874 827       US-A- 5 185 385**

**Beschreibung**

Die Erfindung betrifft ein Verfahren zur Herstellung wasserlöslicher, pulverförmiger, kationischer Polyelektrolyte auf Basis von nichtionogenen und kationischen Monomeren.

Copolymere aus Acrylamid und kationischen Monomeren werden z. B. bei der Abwasserbehandlung und bei der Papierherstellung verwendet. Ihre Aufgabe ist, kolloidale Partikel in wäßrigen Suspensionen zu mechanisch stabilen Flocken, die gut sedimentieren oder sich leicht filtrieren lassen, zu koagulieren.

Aus ökonomischen Gründen ist es wünschenswert, bei geringstem Einsatz an Polyelektrolyt hohe Absetzgeschwindigkeiten und hohe Filtrationsraten der koagulierten Partikel zu erreichen. Eine hohe Wirksamkeit bei der Klärung wäßriger Suspensionen zeigen hochmolekulare kationische Polyelektrolyte mit guter Löslichkeit.

Hochmolekulare, kationische, wasserlösliche Copolymere werden erhalten, wenn die Polymerisation der wäßrigen Monomerlösung bei möglichst niedriger Polymerisationstemperatur und mit geringen Initiatormengen durchgeführt wird.

Da nach dem Polymerisationsstart die Viskosität der Monomerlösung ansteigt und nach kurzer Polymerisationszeit ein festes Gel vorliegt, ist eine gezielte Wärmeabfuhr nicht möglich, d. h. die exotherme Reaktion verläuft nahezu adiabatisch. Um die maximale Polymerisationstemperatur möglichst niedrig zu halten, muß bei gegebener Monomerkonzentration die Temperatur der Monomerlösung zum Zeitpunkt der Initiierung niedrig gewählt werden. Zusammengefaßt bedeutet das, daß zur Herstellung hochmolekularer, kationischer Polymere durch Polymerisation in wäßriger Lösung nicht nur die Initiierungstemperatur und die Initiatormenge, sondern auch die Monomerkonzentration niedrig gehalten werden müssen, wobei sich der Bereich der Initiatormenge in etwa zwischen 0,02 und 5 Gew.% und der der Monomerkonzentration in etwa zwischen 25 und 45 Gew.% bewegt. Diese Voraussetzungen ergeben weitreichende Schwierigkeiten bei der Herstellung wasserlöslicher, hochmolekularer Copolymere aus nichtionogenen und kationischen Monomeren, weil:

-1.) Initiatorsysteme, bestehend aus einem Oxidations- und einem Reduktionsmittel (Redoxsystem), die aktiv genug sind, die Polymerisation bei Temperaturen unter 20 C, bevorzugt unter 0 °C, zu initiieren, nur in begrenztem Umfang zur Verfügung stehen,

-2.) Redoxsysteme, die bei geringer Einsatzmenge und niedriger Starttemperatur die Polymerisation auslösen nicht in der Lage sind, die Polymerisation zu hohem Umsatz zu führen,

-3.) niedrige Initiatormengen sehr lange Polymerisationszeiten erfordern, die eine kontinuierliche Gestaltung des Polymerisationsverfahrens nicht erlauben,

-4.) niedrige Initiatormengen einen schlecht reproduzierbaren Polymerisationsstart und - verlauf ergeben, da schon geringe Schwankungen in der Monomerqualität oder im Sauerstoffgehalt der Monomerlösung zu deutlichen Störungen des Verfahrens führen,

-5.) die Polymerisation bei niedrigen Monomerkonzentrationen nicht nur die Raum-/Zeitausbeute verschlechtert, sondern auch die Zerkleinerung des wasserhaltigen, gelförmigen Polymers in separate Partikel erschwert und die nachfolgende Trocknung behindert wird.

Um die aufgezeigten Probleme bei der Herstellung hochmolekularer, wasserlöslicher Polymere zu überwinden, wird in EP 0 296 331 vorgeschlagen, die Polymerisation bei Temperaturen unter 0 °C in Gegenwart von dispergierten Monomerkristallen zu initiieren. Ausgelöst wird die Polymerisation durch das bekannte, auf Sauerstoffspuren empfindlich reagierende Redoxsystem aus Ammoniumpersulfat und Ammonium-Eisen(II)sulfat. Da mit diesem Redoxsystem kein ausreichender Umsatz erreicht wird, setz man zusätzlich, durch thermischen Zerfall freie Radikale lieferndes 2,2'-Azo-bis(2-amidinopropan)dihydrochlorid (ABAH) hinzu. Der thermische Zerfall dieses Azoinitiators macht sich ab ca. 45 °C durch eine Beschleunigung der Polymerisation bemerkbar, mit der Folge, daß das Molgewicht der entstehenden Polymere mit steigender Polymerisationstemperatur abnimmt. Der Restmonomergehalt an Acrylamid beträgt 970 ppm, derartig hohe Werte im Polymer können aus toxikologischen Gründen nicht akzeptiert werden.

Zur Herstellung hochmolekularer Polyacrylamide durch Polymerisation von Acrylamid oder Acrylamid mit weiteren Comonomeren in wäßriger Lösung wird in USP 4,455,411 ein Initiatorsystem bestehend aus einem Peroxidisulfat und dem Reduktionsmittel Natriumformaldehyd-sulfoxylat (= Natrium-Hydroximethansulfinsäure = Rongalit C®) sowie dem bereits oben genannten 2,2'-Azo-bis(2-amidinopropan)dihydrochlorid (ABAH) beansprucht. Das Initiatorsystem zeigt sich auch als unempfindlich gegenüber schwankenden Reinheiten des verwendeten Monomers. In Beispiel 8 wird die Herstellung eines kationischen Polyelektrolyten beschrieben. Die Copolymerisation von Acrylamid mit quaterniertem Dimethylaminoethylmethacrylat wird mit dem Redoxsystem bei 20 °C initiiert und durch Verwendung von 403 ppm ABAH zu einem hohen Umsatz fortgeführt.

Wie bereits dargestellt, ist für die Herstellung hochmolekularer, gut löslicher Polyelektroyte eine niedrige Starttemperatur, d. h. eine Temperatur der Monomerlösung von unter 20 °C, bevorzugt unter 10 °C, unbedingt erforderlich.

Im Gegensatz zur Redoxpolymerisation ist die Photopolymerisation einer Monomerlösung in Gegenwart eines durch Belichtung mit UV-Licht freie Radikale liefernden Initiators weitgehend unabhängig von der Starttemperatur (Chemical Reviews, Vol. 68, No. 2, March 25, 1968). Der Nachteil der Photopolymerisation ergibt sich aus dem Lambert-Beer'schen Gesetz, das besagt, daß die Lichtintensität in der bestrahlten Monomerlösung mit zunehmender Schichtstärke exponentiell abnimmt. Das ist der Grund, weshalb bei photochemischen Reaktionen stark gerührt werden sollte, um das abreagierte Produkt in der Reaktionszone durch neues Substrat zu ersetzen.

Bei kontinuierlichen Verfahren zur Herstellung hochmolekularer, wasserlöslicher Polymere, wie in EP 0 296 331 A2 Beisp. 4 beschrieben, ist ein Durchmischen der polymerisierenden Lösung nicht möglich, da sie kurz nach dem Polymerisationsstart, ausgelöst durch ein Redox-Initiatorsystem aus Eisenammmoniumsulfat/ Ammoniumpersulfat unter Zusatz eines Azoinitiators, zu einem festen, nicht mehr rührfähigen Gel erstarrt.

In der DOS 27 16 606 wird vorgeschlagen, die kontinuierliche Herstellung wasserlöslicher Acrylpolymere durch Photopolymerisation bei bevorzugt 3 bis 8 mm Schichtstärke der Monomerlösung auf einem beweglichen Träger durchzuführen. Um den Restmonomergehalt der erhaltenen Polymere gegenüber den nach dem Verfahren der DAS 2 050 988 erhaltenen Polymeren abzusenken, ist es nach Anspruch 1d) erforderlich, die Polymerschicht nach dem Ablösen vom Träger vorzugsweise weitere 40 bis 90 Min. zu belichten. Der Restgehalt an Acrylamid im Polymer nach Beispiel 4 beträgt trotz Einsatz von 240 ppm Benzoinpropylether und 75 Min. Belichtungszeit 600 ppm. Derartig lange Polymerisationszeiten bei geringer Schichtstärke ergeben schlechte Raum-/Zeitausbeuten. Die Klebrigkeit der erhaltenen Polymere, die die Anmelderin feststellt, ist eine Folge der dünnen polymerisierenden Schicht, d. h. durch das ungünstige Verhältnis von Volumen zu Oberfläche wird die Menge niedermolekularer, klebriger Anteile erhöht, die sich an den Phasengrenzen, insbesondere zur Gasphase, bilden.

Zur Herstellung wasserlöslicher, niedermolekularer Polymere wird in der DOS 22 48 715 vorgeschlagen, die Photopolymerisation in dünner Schicht unter Verwendung von Benzoinpropylether und einem Beschleuniger durchzuführen. Der Beschleuniger besteht aus Azo-bis-isobutyronitril oder dem Redoxsystem Persulfat/Bisulfit.

Aus der EP 0 228 638 A1 ist ein Verfahren zur kontinuierlichen Herstellung von Polymerisaten und Copolymerisaten von wasserlöslichen Monomeren bekannt, bei dem die Polymerisation der wäßrigen Monomerlösung zwischen -10°C und 120°C auf einem beweglichen Transportband stattfindet und durch chemische Initiierung und/oder energiereiche Strahlung/Licht initiiert wird. Polymerisate mit niedrigen Gehalten an Restmonomer und Gel werden nicht beschrieben.

Der EP 0 228 637 B 1 sind kationische Copolymerisate aus Acrylamid und Dimethylaminopropylacrylamid als Flockungsmittel zu entnehmen. Die Polymerisationsinitiierung kann durch Redoxsysteme, thermisch zerfallende Initiatoren oder durch photochemisch gebildete Radikale ausgelöst werden.

Aus der DE 40 15 085 C2 sind vernetzte, wäßrige Flüssigkeiten absorbierende Polymerisate bekannt, die durch ein hohes Aufnahmevermögen unter Druck und durch niedrige Restmonomergehalte charakterisiert sind. Die Polymerisation wird erfindungsgemäß durch ein Redox-Initiatorsystem aus Formamidinsulfinsäure und org. Peroxiden ausgelöst, zusätzlich ist auch eine Auslösung der Polymerisation auch durch UV-Licht möglich. Als weitere Bestandteile der Polymerisationsinitiatoren können auch Azoverbindungen hinzugefügt werden. Wasserlösliche Polymerisate werden in diesem Patent nicht beschrieben.

Aus dem Stand der Technik ist kein Verfahren zur Herstellung kationischer, wasserlöslicher Polyelektrolyte bekannt, das bei niedrigen Temperaturen in kurzen, technisch akzeptablen Zeiten die Polymerisation startet, die Bildung von Polymeren mit hohen Molekulargewichten von über 1 Million ermöglicht und unter Vermeidung großer Mengen teurer Azoinitiatoren niedrige Restmonomer- und Gelanteile aufweist.

Aufgabe der vorliegenden Erfindung ist es, ein Verfahren zur Herstellung hochmolekularer, wasserlöslicher, kationischer Polymere bereitzustellen, das die Polymerisation von Monomerlösungen in Schichtstärken größer 1 cm bei Initiierungstemperaturen von unter 20 °C, bevorzugt von unter 10 °C, erlaubt. Dieses neue Verfahren soll weitgehend unempfindlich gegenüber Restsauerstoff in der Monomerlösung und schwankenden Monomerqualitäten sein.

Das neue adiabatische Polymerisationsverfahren soll im unteren, wie auch im oberen Temperaturbereich steuerbar sein. Der Gehalt an toxischen Restmonomeren im Polymer soll nach dem neuen Verfahren unter 500 ppm, bevorzugt unter 100 ppm liegen, ohne daß der Zusatz von hohen Mengen an teurem Azoinitiator erforderlich ist.

Die Aufgabe wurde gelöst durch Bestrahlen einer Monomerlösung bei einer Temperatur von kleiner 20 °C mit Licht in Gegenwart eines A Photoinitiators und B eines Redoxsystem, dadurch gekennzeichnet, daß das Redoxsystem die Polymerisation erst bei Temperaturen von größer oder gleich 20 °C zu initiieren vermag.

Innerhalb des Redoxsystems B werden als Oxidationsmittel Hydroperoxide, wie z. B. tert-Butylhydroperoxid und Cumolhydroperoxid eingesetzt. Üblicherweise setzt man 1 bis 1000 ppm, bevorzugt 10 ppm bis 500 ppm und besonders bevorzugt 10 ppm bis 200 ppm organisches Hydroperoxid bezogen auf die Monomerlösung ein. Als Reduktionsmittel geeignet sind Sulfinsäuren bzw. die Salze der Sulfinsäuren wie z. B. Natriumhydroximethansulfinat, p-Toluolsulfinsäure und Formamidinsulfinsäure. Hierbei werden üblicherweise Mengen von 0,1 bis 1000 ppm, vorzugsweise 1 bis 500 ppm und besonders bevorzugt 10 bis 250 ppm bezogen auf die Monomerlösung eingesetzt.

Als Photoinitiatoren, die bei Lichteinwirkung Radikale ausbilden, die polymerisationsauslösend wirken, werden z. B. Benzoinderivate wie Benzoin-isopropylether oder Benzildimethylketal, Azoinitiatoren wie 2,2'-Azo-bis(2-amidinopropan)dihydrochlorid oder 2,2'-Azo-bis(isobutyronitril) eingesetzt. Die Menge an Photoinitiatoren beträgt 5 bis 500 ppm, bevorzugt 5 bis 100 ppm.

Das erfindungsgemäße adiabatische Polymerisationsverfahren ist trotz des schnellen Gelierens der polymerisierenden Monomerlösung weitgehend steuerbar. Im Temperaturbereich unter 30 °C kann der Polymerisationsverlauf, d. h. die Menge der gebildeten Radikale, durch die Art und die Konzentration des Photoinitiators sowie die Bestrahlungsstärke bestimmt werden. Die überraschend hohe Unempfindlichkeit des erfindungsgemäßen Verfahrens gegenüber Restgehalten von Sauerstoff in der Monomerlösung ermöglicht daher, im Gegensatz zu anderen Initiatorsystemen einen verzögerungsfreien Polymerisationsstart und damit auch einen höheren Produktionsdurchsatz.

Aufgrund der guten Steuerbarkeit des Polymerisationsverfahrens ist es auch möglich, die Konzentration der Monomerlösung im oberen Bereich zu halten, ohne daß ungewollte, schlecht beherrschbare Temperaturspitzen auftreten.

Ein weiterer Vorteil des erfindungsgemäßen Verfahrens ist, daß die Initiatoren im kontinuierlichen Produktionsverfahren gründlich, z.B. in einem Statikmischer, in der Monomerlösung verteilt werden können, ohne daß es zum vorzeitigem Polymerisationsstart und damit zur Verstopfung der Dosiersysteme vor der Aufgabe der Monomerlösung auf das Polymerisationsband kommt.

Der Polymerisationsstart erfolgt durch Belichten der auf unter 20 °C, bevorzugt unter 10 °C und besonders bevorzugt unter 0 °C, abgekühlten Monomerlösung. Bevorzugt wird mit UV-Licht der Wellenlänge 300 bis 400 nm belichtet. Vorteilhaft sind UV-Lampen zu verwenden, deren Strahlungsanteil bei einer Wellenlänge von 360 nm ein Maximum hat (z. B. TL09, Fa. Philips).

Die Schichtstärke der bestrahlten Monomerlösung beträgt mindestens 1 cm, bevorzugt mehr als 2 cm und besonders bevorzugt mehr als 4 cm.

Durch die, durch Bestrahlung der Monomerlösung ausgelöste exotherme Reaktion steigt die Temperatur in der polymerisierenden Lösung an und erreicht oberhalb von 20 °C die Starttemperatur des Redoxsystems. Die Menge der Redoxkomponenten und das Verhältnis von Oxidations- zu Reduktionsmitteln bestimmt den Polymerisationsverlauf bei höheren Temperaturen, so daß das Molgewicht der Polymere durch ein zu hohes Radikalangebot nicht abgesenkt aber gleichzeitig ein hoher Umsatz erzielt wird.

Es war überraschend, daß bei dem beanspruchten Photopolymerisationsverfahren in Gegenwart eines Redoxsystems hohe Molgewichte von über 1 Million und gleichzeitig Restgehalte an toxischem Monomer von weniger als 200 ppm, bevorzugt von weniger 100 ppm und besonders bevorzugt von weniger 50 ppm erreicht werden.

In besonders hoher Qualität herstellbar sind nach dem neuen Verfahren wasserlösliche, hochmolekulare, kationische Copolymere, durch Polymerisation von kationischen Monomeren wie z. B. N,N-Dialkylaminoalkyl(meth) acrylate, N,N-Dialkylaminoalkyl(meth)acrylamide als Salz oder in quaternierter Form mit nichtionogenen Monomeren wie z. B. Acrylamid, Methacrylamid und N-Alkyl(meth)acrylamide.

Das Verhältnis von kationischen zu nichtionogenen Monomeren beträgt 98 : 2 bis 2 : 98 Gew.%.

Der unkontrollierte Einfluß von Schwermetallsalzen wie beispielsweise Cu-, Fe- oder Mn-Ionen auf das Redoxsystem kann durch die Zugabe von komplexierenden Substanzen zur Monomerlösung weitgehend beseitigt werden. Beispiele für solche komplexierenden Substanzen sind Diethylentriaminpentaessigsäure (Versenex®, DTPA) und Ethylendiamintetraessigsäure (EDTA).

Durchgeführt wird das Polymerisationsverfahren bevorzugt kontinuierlich in Kästen, die sich auf einem bewegten Träger befinden, oder auf einem elastischen Förderband, daß durch seitliche Rollen in eine quer zur Förderrichtung, konkave Form gedrückt wird, so daß die Monomerlösung eine Schicht von mehr als 1 cm Höhe ausbilden kann. Die Bandanlage befindet sich in einem tunnelartigen Gehäuse aus dem entstehende Brüden über einen Abgaswäscher abgesaugt werden.

Zur Durchführung der Photopolymerisation sind an der Gehäusedecke einzeln schaltbare, in der Höhe verstellbare UV-Leuchtstofflampen installiert.

Ein Nachteil dieser kontinuierlichen Anlage ist, daß die Monomerlösung im nach oben offenen wannen- oder kastenförmigen Polymerisationsbehälter in direktem Kontakt mit der Gasphase im Tunnelgehäuse steht, die nicht sauerstofffrei gehalten werden kann. Obwohl der Sauerstoffgehalt der Monomerlösung vor dem Eintritt in die Polymerisationsanlage durch Spülen mit Stickstoff auf unter 1 ppm abgesenkt wird, steigt er durch Austausch mit der Gasphase im Tunnel in der Deckschicht der Monomerlösung weder an, wodurch die Polymerisation inhibiert, bzw. der Umsatz reduziert wird. Dieser Nachteil wird durch das erfindungsgemäß beanspruchte Verfahren behoben, so daß auch bei höheren Sauerstoffgehalten in der Monomerlösung von z.B. 1 ppm ohne zeitverzögernde Inhibierungsphase polymerisiert werden kann.

Nach der Polymerisation wird der heiße Gelblock in einem Kneter vorzerkleinert und gegebenenfalls mit Oxidationsstabilisatoren, pH-Stabilisatoren oder Behandlungsmitteln wie z. B. DE 41 23 889 A1 und DE 41 27 814 A1 beschrieben, behandelt. Insbesondere wird eine Behandlung des Polymergels nach dem Verfahren der DE 37 24 709 A1 bevorzugt, um den Anteil von unlöslichen Anteilen (Gelanteil) zu reduzieren und den Restmonomeranteil weiter abzusenken. Nach der Zerkleinerung auf eine Korngröße von 1 bis 5 mm in einem Extruder wird das Gel im Heißluftstrom getrocknet und anschließend gemahlen.

Die nach dem erfindungsgemäßen Verfahren hergestellten kationischen Polymerisate sind besonders vorteilhaft bei der Reinigung von kommunalen und technischen Abwässern sowie bei den Flockungsprozessen der Papierherstellung geeignet, da sie eine hervorragende Flockungsaktivität aufweisen und niedrige Gehalte an toxischem Restmonomer enthalten.

**Beispiele**

Bestimmungsmethoden

Zur Bestimmung der Kenndaten werden die nach den Beispielen erhaltenen pulverförmigen Polymere der Kornfraktion 150 bis 850 um wie folgt geprüft.

1. Viskosität in Salzlösung

In einem 400 ml Becherglas werden 3,4 g Polymer in 302,6 g entsalztem Wasser unter Rühren in 60 Min. gelöst. Nach Zugabe von 34 g Kochsalz wird weitere 15 Min. gerührt und dann die Brookfield-Viskosität bei 20 °C mit Spindel Nr. 1 und 10 Upm bemessen.

2. Restmonomeres Acrylamid (ACA)

Die Bestimmung erfolgt mittels HPLC.

3. Unlösliche Anteile - Gelgehalt

0,80 g pulverförmiges Polymer werden in ein 1.000 ml-Becherglas eingewogen und unter Rühren in 800 ml Wasser mit 25 °dH gelöst. Nach einer Lösezeit von 60 Min wird die Lösung über ein 315 µm Normsieb filtriert und der Rückstand 5 mal mit 1l Wasser gewaschen. Das Volumen des Rückstands wird im Meßzylinder bestimmt.

$$\text{Gelgehalt [ml/l]} = \text{Rückstand [ml/l]} \times 1,2$$

4. Grenzviskosität

Die Bestimung erfolgt durch Messung der Durchflußzeiten unterschiedlich konzentrierter Polymerlösungen, die unter Verwendung von 10%iger Kochsalzlösung hergestellt wurden, in einem Ubbelohde Viskosimeter bei 20°C. Die Angabe der Grenzviskosität [η] erfolgt in [ml/g].

Vergleichsbeispiel 1 bis 4

In diesen Vergleichsbeispielen wird gezeigt, daß Initiatorsysteme aus Azoinitiator und dem Redoxsystem Sulfinsäure/Hydroperoxid ohne Belichtung keine Polymerisation auslösen.

In einer oben offenen Kunststoffschale werden 273,6 g einer 50%igen, handelsüblichen mit 30 ppm $Cu^{2+}$ stabilisierten Acrylamidlösung, 532 g einer 60%igen, wäßrigen Lösung von mit Methylchlorid quaterniertem Dimethylaminopropylacrylamid, 380 g enthärtetes Wasser und 75 ppm Versenex 80 (Fa. DOW) als 25%ige Lösung eingewogen. Die Schichthöhe der Monomerlösung beträgt 8 cm. Unter Rühren mit einem Magnetrührer wird der pH-Wert der Monomerlösung mit ca. 4g 50%iger Schwefelsäure auf 4,5 und auf die in Tab. 1 angegebene Starttemperatur eingestellt. Durch Einperlen von Stickstoff wird der Sauerstoffgehalt auf 0,1 ppm abgesenkt und die in Tab. 1 angegebenen Initiatoren jeweils in 2 g Wasser gelöst zugegeben. Die Temperaturentwicklung wird elektronisch gemessen und aufgezeichnet.

Tabelle 1

| Vergleich | Start-Temp. °C | ABAH [1] ppm | t-BHP [2] ppm | HMS [3] ppm | Ergebnis |
|-----------|----------------|--------------|---------------|-------------|----------|
| 1 | 6 | 200 | 80 | 80 | keine |
| 2 | 0,6 | 200 | 120 | 120 | Poly- |
| 3 | 10 | 200 | 80 | 120 | meri |
| 4 | 20 | 200 | 120 | 120 | sation[4] |

[1] 2,2'-Azo-bis-2-amidinopropan·2HCl,

[2] tert. Butylhydroperoxid,

[3] Hydroximethansulfinsäure-Na

[4] nach 40 Minuten Verweilzeit

Beispiel 1 bis 4

Ansatz und Verfahren nach Vergleichsbeispiel 1 bis 4 werden wiederholt mit der Maßnahme, daß nach Zugabe der Initiatoren die Oberfläche der Monomerlösung mittels einer UV-Lampe, deren Hauptstrahlungsanteil bei 365 nm liegt, belichtet wird. Die Bestrahlungsstärke an der Flüssigkeitsoberfläche beträgt 2000 $\mu$W/cm$^2$. Die Polymerisation startet erkennbar am Temperaturanstieg, innerhalb von 120 Sekunden. 30 Min. nach Erreichen des Temperatur-maximums wird der gelförmige Polymerblock der Schale entnommen unter Zusatz von 20 ml einer 6%igen Hydroxylaminchloridlösung in einem Fleischwolf zerkleinert und bei 110 °C in 1,25 Std. getrocknet. Nach dem Mahlen wird die Siebfraktion 150 bis 1850 $\mu$m geprüft.

Tabelle 2

| Beispiel | ABAH ppm | t-BHP ppm | HMS ppm | Start-Temp °C | Polym. Zeit min | Temp. max. °C | Visk. mPa.s | Gel ml | ACA[5] ppm |
|---|---|---|---|---|---|---|---|---|---|
| 1 | 200 | 80 | 80 | + 5,3 | 30 | 65 | 510 | 20 | 170 |
| 2 | 200 | 120 | 120 | - 5,0 | 33 | 57 | 650 | 13 | 30 |
| 3 | 200 | 80 | 120 | + 5,0 | 26,5 | 67 | 480 | 9 | 50 |
| 4 | 200 | 120 | 180 | - 5,0 | 28 | 58 | 720 | 19 | 60 |

[5] Restmonomeres Acrylamid

Vergleichsbeispiel 5 bis 8

Ansatz und Verfahren wie in den Beispielen 1 bis 4 werden wiederholt, mit der Maßnahme, daß in Anlehnung an die Beispielsversuche der EP 228 637 B1 als Initiator nur ein Azoinitiator (ABAH)/UV-Licht eingesetzt wird. Es zeigt sich, daß niedrige Restmonomerund Gelgehalte nur durch sehr hohe Mengen an Azoinitiator zu erreichen sind.

Tabelle 3

| Vergleichs versuch | ABAH ppm | Start- Temp. °C | Polym. Teit min | Temp. max. °C | Visk. mPa.s | Gel ml | ACA ppm |
|---|---|---|---|---|---|---|---|
| 5 | 200 | + 5 | 53,5 | 63 | 2.100 | > 100 | 1.300 |
| 6 | 200 | - 5 | 56 | 53,5 | 2.160 | > 100 | 1.600 |
| 7 | 800 | + 5 | 34 | 52 | 470 | 21 | 220 |
| 8 | 800 | -5 | 39 | 59 | 615 | 30 | 200 |

Vergleichsbeispiel 9 und 10

Das Verfahren nach Vergleichsbeispiel 1 wird wiederholt. Hier wurde in Anlehnung an Example 8 der US 4,455,411 gearbeitet. Es zeigte sich jedoch, daß mit dem beschriebenen Redoxinitiatorsystem bei niedrigen Temperaturen in akzeptablen Zeiten keine Polymerisationsauslösung zu erreichen war.

300 g einer 50%igen, mit 30 ppm $Cu^{2+}$ stabilisierten Acrylamidlösung, 188 g einer 80%igen Lösung von mit Methylchlorid quaterniertem Dimethylaminoethylacrylat, 506 g vollentsalztes Wasser und 75 ppm Versenex 80 werden eingewogen. Unter Rühren mit einem Magnetrührer wird der pH-Wert mit ca. 4,5 g 50%iger Schwefelsäure auf 3,5 und auf eine Starttemperatur von 20 °C eingestellt. Durch Einperlen von Stickstoff wird der Sauerstoffgehalt auf 0,1 ppm abgesenkt und die in Tab. 4 angegebenen Initiatoren jeweils in 2 g Wasser gelöst zugegeben.

Tabelle 4

| Vergleichs versuch | ABAH ppm | APDS [1) ppm | HMS ppm | Ergebnis |
|---|---|---|---|---|
| 9 | 400 | 10 | 10 | nach 50 Min. |
| 10 | 400 | 20 | 40 | keine Polymerisat |

[1)] Ammoniumperoxidisulfat

Vergleichsbeispiel 11 bis 13

Vergleichsbeispiel 9 und 10 werden unter Anwendung des Verfahrens nach Beispiel 4 wiederholt. Es wird gezeigt, daß die Verwendung des nicht erfindungsgemäßen Peroxids zu hohen Restmonomeranteilen führt.

Tabelle 5

| Vergleichs versuch | ABAH ppm | APDS ppm | HMS ppm | Polym. Zeit min | Temp. max. °C | Visk. mPa.s | Gel ml | ACA ppm |
|---|---|---|---|---|---|---|---|---|
| 11 | 400 | 10 | 10 | 18 | 53 | 910 | 20 | 1.650 |
| 12 | 200 | 50 | 50 | 22 | 50 | 1.380 | 45 | 1.500 |
| 13 | 400 | 50 | 50 | 16 | 53 | 835 | 21 | 930 |

Beispiel 5

In einer oben offenen Kunststoffschale werden 274 g einer 50%igen mit 30 ppm Kupfer(II)-Ionen stabilisierten Acrylamidlösung, 399 g einer 80%igen Lösung von mit Methylchlorid quaterniertem Dimethylaminoethylacrylat, 516 g vollentsalztes Wasser und 75 ppm Versenex 80 eingewogen. Die Schichthöhe der Monomerlösung beträgt 8,5 cm. Unter Rühren wird der pH-Wert mit 50%iger Schwefelsäure auf 3,5 eingestellt. Während des Abkühlens auf- 5 °C wird der Sauerstoffgehalt der Lösung durch Spülen mit Stickstoff auf 0,1 ppm gesenkt und 200 ppm ABAH, 120 ppm t-BHP und 180 ppm Natriumhydroximethan-sulfinsäure jeweils in 2 ml Wasser gelöst zugesetzt. Nach dem Abstellen des Rührers wird die Lösung mit einer Leuchtstofflampe TL 09 der Fa. Philips belichtet. Die Beleuchtungsstärke an der Oberfläche der Monomerlösung beträgt 2000 $\mu$W/cm$^2$. Nach einer Polymerisationszeit von 16 Min. wird die max. Temperatur von 58 °C erreicht. Nach 30 Min. Standzeit wird der Gelblock unter Zusatz von 1,2 g Hydroxylaminhydrochlorid gelöst in 20 ml Wasser zerkleinert. Nach der Trocknung bei 110 °C im Umlufttrockenschrank und Mahlung wird die Siebfraktion 150 bis 850 $\mu$m hinsichtlich ihrer Eiogenschaften geprüft:
Viskosität: 610 mPa.s, Gel: < 5 ml, Acrylamid: 190 ppm

Beispiel 6

In einer Schale werden eingewogen: 0,18 g Versenex 80 als 40%ige Lösung, 510,72 g 50%ige Acrylamidlösung, 134,4 g einer 60%igen Lösung von N-Acrylamidopropyl-trimethyl-ammonchlorid und 547,3 g Wasser. Der pH-Wert der Lösung wird mit 1,3 g 50%iger Schwefelsäure auf 4,5 eingestellt. Nach dem Spülen mit Stickstoff und Abkühlen auf -5 °C werden 200 ppm ABAH, 60 ppm t-BHP und 50 ppm Natriumhydroximethylsulfinsäure zugegeben. Durch Belichten der Monomerlösung mit 1500 $\mu$W/cm$^2$ der Frequenz 365 nm wird die Polymerisation ausgelöst. Nach 18 Min. wird die maximale Temperatur von 63 °C erreicht. Das auspolymerisierte Gel wird danach wie in den Beispielen zuvor beschrieben weiter behandelt. Die Eigenschaften des Endproduktes waren wie folgt:
Viskosität: 620 mPa.s, Gel: 10 ml, Acrylamid: 110 ppm

Beispiel 7

In eine Schale mit einer Bodenfläche von 100 cm$^2$ werden eingewogen:
1,3 g 50%ige Schwefelsäure, 0,18 g Versenex 80 als 40%ige Lösung, 273,6 g 50%ige Acrylamidlösung, 532 g 60%ige Lösung von N-Acrylamidopropyl-trimethyl-ammonchlorid und 380 g zerkleinertes Eis. Nach dem Abkühlen auf- 5 °C und Absenken des Sauerstoffgehaltes auf 0,1 ppm, werden 10 ppm Benzildimethylketal gelöst in 1,2 g Acrylsäure, 120 ppm Cumolhydroperoxid gelöst in 1,44 g Acrylsäure und 180 ppm Nahydroximethansulfinsäure in 2,16 g Wasser zugegeben. Durch Bestrahlen mit UV-Licht wie in Beispiel 6 steigt die Temperatur in 24 Min. auf 60 °C an. Nach der Aufarbeitung des Polymergels wie in Beispiel 5 wird ein pulverförmiges Polymer mit folgenden Kenndaten gewonnen:
Viskosität: 395 mPa.s, Gel: < 5 ml, Acrylamid: 20 ppm

Beispiel 8

Beispiel 7 wird mit folgender Initiatorkombination wiederholt:
10 ppm O-Ethylbenzoin in 1,2 g Acrylsäure, 120 ppm t-Butylhydroperoxid in 2,88 g Wasser und 180 ppm Na-hydroxi-methansulfinsäure in 2,16 g Wasser. Es ergaben sich die folgenden Produkteigenschaften:
Viskosität: 440 mPa.s, Gel: < 5 ml, Acrylamid: 50 ppm

Beispiel 9

Beispiel 8 wird wiederholt mit der Maßnahme, daß als Photoinitiator 30 ppm 4-Benzoylbenzoesäure-Natriumsalz eingesetzt werden. Die Produkteigenschaften waren wie folgt: Viskosität: 430 mPa.s, Gel: < 5 ml, Acrylamid: 60 ppm

Beispiel 10

Beispiel 4 wird wiederholt mit der Änderung, daß der Polymerisationsstart bei einem Sauerstoffgehalt der Monomerlösung von 1 ppm erfolgt.

| Polym.Zeit min | max. Temp. °C | Visk. mPa.s | Gel ml | ACA ppm |
|---|---|---|---|---|
| 25 | 57 | 760 | 22 | 40 |

Beispiel 11

Beispiel 7 wird wiederholt mit einem Initiatorsystem, bestehend aus 30 ppm Benzildimethylketal in 3,6 g Acrylsäure, 80 ppm tert. Butylhydroperoxid in 1,92 g Wasser und 500 ppm p-Toluol-sulfinsäure-Natriumsalz in 6 g Wasser.

| Polym.Zeit min | max. Temp. °C | Visk. mPa.s | Gel ml | ACA ppm |
|---|---|---|---|---|
| 22 | 55 | 530 | 10 | 40 |

Beispiel 12

In einem Rührbehälter werden eingewogen:
2.058 kg 50%ige Acrylamidlösung mit einem Gehalt von 33 ppm Kupfer-II-ionen, 2.615 kg enthärtetes Wasser, 0,7 kg Versenex 80 und 4.000 kg einer 60%igen Lösung von mit Methylchlorid quaterniertem N-Dimethyl-aminopropylacrylamid. Der pH-Wert der Monomerlösung wird mit ca. 15 kg 50%iger Schwefelsäure auf 4,5 eingestellt. Dem Rührbehälter werden stündlich 400 kg Monomerlösung entnommen und kontinuierlich auf - 5 °C gekühlt, mit Stickstoff auf einen Restsauerstoffgehalt von 0,9 ppm gespült und auf ein Förderband, wie in EPA 0228638 beschrieben, dosiert. Vor der Aufgabe auf das Förderband wird die Monomerlösung mit folgenden Initiatorlösungen vermischt: 8,6 l/h 1%ige ABAH-Lösung, 7,8 l/h einer 1%igen Lösung von Hydroximethansulfinsäure-Natriumsalz und 10,3 l/h einer 0,5%igen tert-Butylhydroperoxidlösung. Ausgelöst wird die Polymerisation, erkennbar am schnellen Gelieren der Monomerlösung, durch Belichten mit Leuchtstofflampen, deren Hauptstrahlungsanteil bei einer Frequenz von 360 nm liegt. Die Beleuchtungsstärke beträgt an der Oberfläche der Monomerlösung im Mittel 1.200 µW/cm$^2$. Nach einer Veriveilzeit von 45 Min. wird der feste Gelstrang vom Förderband abgenommen und in einem Fleischwolf unter Zusatz von 10,5 l/h einer 10%igen Hydroxylamin-hydrochloridlösung zerkleinert. Die Trocknung des Gels auf einen Restwassergehalt von ca. 10 % erfolgt auf einem Bandtrockner bei 110 °C Lufttemperatur in 75 Minuten. Anschließend wird das Polymer gemahlen und abgesiebt. Das Polymer der Korngröße 0,09 - 1,4 mm hat folgende Kenndaten:
Viskosität: 620 mPa.s, Gel: 8 ml, Rest-Acrylamid: 50 ppm, Viskosität der 1%igen wäßrigen Lösung: 7.450 mPa.s

Vergleichsbeispiel 14

Hier wird demonstriert, daß eine Polymerisation mit einem Redoxsystem, das unter 20°C startet, zu hohen Restmonomergehalten führt.
In ein zylindrisches Gefäß mit Magnetrührer werden eingewogen:
596 g vollentsalztes Wasser, 151,2 g Acrylamid (Fa. Fluka) und 441 g 80%iges mit Methylchlorid quaterniertes (2-Dimethylaminoethyl)-Acrylat (Ageflex FA1Q80MC, CPS Chemical Company). Der pH-Wert der Lösung wird mit 50%iger Schwefelsäure auf 4,5 eingestellt. Der Sauerstoffgehalt der Lösung wird durch Spülen mit Stickstoff auf 0,1 ppm abgesenkt und gleichzeitig die Temperatur auf - 5 °C eingestellt. Das Polymerisationsgefäß wird mit einem Deckel, der Bohrungen zur Aufnahme eines Temperaturfühlers und für die Zugabe der Initiatoren hat, verschlossen. Folgende wäßrige Initiatorlösungen werden unter Rühren zugegeben:
4,8 g einer 10%igen ABAH-Lösung, 0,72 g 1%ige tert.-Butylhydroperoxidlösung und 1,8 g einer 1%igen Lösung von Na-Hydroximethansulfinat. Nach Zugabe von 0,72 g einer 1%igen Lösung von Ammoniumeisen(II)-sulfat·6 H$_2$O startet die Polymerisation erkennbar am Temperaturanstieg. Das Temperaturmaximum von 64 °C wird nach 16 Minuten erreicht. Nach 30 Minuten Standzeit wird der Gelblock unter Zusatz von 4.000 ppm Hydroxylammoniumchlorid als 0,4%ige Lösung zerkleinert und getrocknet. Nach Mahlung und Absiebung auf die Kornfraktion 0,09 bis 1,4 werden folgende Kenndaten ermittelt:
Viskosität: 595mPa.s, Gel: 5ml, Rest-Acrylamid: 4.595 ppm

Beispiel 13

Das Verfahren nach Beispiel 4 wird wiederholt mit der Maßnahme, daß der Anteil an kationischem Monomer auf 58 Mol % erhöht wird. Es wurden folgende Produkteigenschaften gemessen:

Viskosität: 680 mPa.s, Gel: 15 ml, Rest-Acrylamid: < 10 ppm, Viskosität der 1%igen Lösung in Wasser: 12.200 mPa. s, Grenzviskosität (in 10%iger NaCl-Lösung): 860 ml/g

Beispiel 14

Das Verfahren nach Beispiel 4 wird wiederholt mit den Maßnahmen, daß die Monomerkonzentration auf 42 Gew.-% eingestellt wird und der Anteil an kationischem Monomer 80 Mol-% beträgt. Produkteigenschaften: Viskosität: 485 mPa.s, Gel: 11 ml, Rest-Acrylamid: < 1 ppm, Viskosität der 1%igen Lösung in Wasser: 6.000 mPa.s, Grenzviskosität (in 10%iger NaCl-Lösung): 760 ml/g

Vergleichsbeispiel 15

Hier wird demonstriert, daß die Kombination von UV-Licht/Azoinitiator mit einem nicht erfindungsgemäßen Redoxsystem zu Polymerisaten mit hohen Restmonomergehalten führt.

In ein oben offenes, zylindrisches Gefäß mit Magnetrührer werden eingewogen: 274 g 50%ige Acrylamidlösung, 516 g entsalztes Wasser und 399 g 60%iges Trimethylammonium-ethylacrylatchlorid. Nach Zugabe von 75 ppm Versenex 80 wird der pH-Wert mit 50%iger Schwefelsäure auf 4 eingestellt. Während des Spülens mit Stickstoff auf einen Restsauerstoffgehalt von < 0,1 ppm wird die Monomerlösung auf- 5 °C abgekühlt (Schichtstärke = 8 cm). Nach Zugabe von 2,4 g einer 10%igen ABAH-Lösung und 3,0 g einer 2%igen Ammoniumperoxidisulfatlösung wird wie in Beispiel 1 belichtet und gleichzeitig 1,2 g einer 2%igen Natriumdisulfitlösung eingerührt. Die Polymerisation startet, erkennbar am Temperaturanstieg, sofort. Nach 21 Minuten wird die maximale Temperatur von 50 °C erreicht. Nach weiteren 30 Minuten Standzeit wird dem Polymerisationsgefäß ein weicher Gelblock, der sich nur schwer zerkleinern läßt, entnommen und mit 4.000 ppm Hydroxylammoniumchlorid 0,4%ig in Wasser vermischt. Nach der Trocknung auf einen Wassergehalt von 7,9 % und Mahlung auf eine Korngröße von 0,09 bis 1,4 mm werden folgende Kenndaten bestimmt: Viskosität: 145 mPa.s, Gel: < 5 ml, Rest-Acrylamid: 4.400 ppm, Viskosität der 1%igen Lösung in Wasser: 980 mPa.s

**Patentansprüche**

1.  Verfahren zur Herstellung hochmolekularer, wasserlöslicher Polyelektrolyte durch adiabatische Photopolymerisation von nichtionogenen und kationischen Monomeren in wäßriger Lösung in Gegenwart von
    A einem Initiator, der bei Bestrahlung mit Licht freie Radikale liefert und
    B einem als Initiator wirksamen Redoxsystem,
    **dadurch gekennzeichnet, daß** die Photopolymerisation bei Temperaturen unter 20°C durch A ausgelöst wird und daß das Redoxsystem B erst bei Temperaturen von größer oder gleich 20°C die Polymerisation zu initiieren vermag.

2.  Verfahren nach Anspruch 1, **dadurch gekennzeichnet, daß** das Licht eine Wellenlänge von 300 bis 400 nm aufweist.

3.  Verfahren nach Anspruch 1 und 2, **dadurch gekennzeichnet, daß** die Photopolymerisation unter 10°C, bevorzugt unter 0°C initiert wird.

4.  Verfahren nach Anspruch 1 bis 3, **dadurch gekennzeichnet, daß** das Oxidationsmittel im Redoxsystem aus einem oder mehreren Hydroperoxiden besteht.

5.  Verfahren nach Anspruch 1 bis 4, **dadurch gekennzeichnet, daß** das Reduktionsmittel im Redoxsystem aus einer oder mehreren Sulfinsäuren oder deren Salzen besteht.

6.  Verfahren nach Anspruch 1 bis 5, **dadurch gekennzeichnet, daß** das kationische Monomer aus derGruppe der N,N-Dialkylaminoalkyl(meth)acrylate und/oder der N,N-Dialkylaminoalkyl(meth)acrylamide als Salz oder in quaternierter Form und das nichtionogene Monomer aus der Gruppe Acrylamid, Methacrylamid und der N-Alkyl(meth) acrylamide ausgewählt sind.

7.  Verfahren nach Anspruch 1 bis 6, **dadurch gekennzeichnet, daß** das Verfahren kontinuierlich bei Schichthöhen der Monomerlösung von mehr als 1 cm, bevorzugt mehr als 4 cm, durchgeführt wird.

8. Verfahren nach Anspruch 1 bis 7, **dadurch gekennzeichnet, daß** das wäßrige Polymerisatgel nach der Polymerisationsreaktion zerkleinert, nachbehandelt und getrocknet wird.

**Revendications**

1. Procédé de préparation de polyélectrolytes solubles dans l'eau, de haut poids moléculaire par photopolymérisation adiabatique de monomères non ionogènes et cationiques en solution aqueuse en présence de:

   A) un promoteur qui fournit par irradiation avec de la lumière, des radicaux libres et,
   B) un système redox actif comme promoteur,

   **caractérisé en ce que**
   la photopolymérisation est déclenchée à des températures en dessous de 20°C par A, et le système redox B ne permet d'amorcer la polymérisation qu'à partir des températures supérieures ou égales à 20°C.

2. Procédé selon la revendication 1,
   **caractérisé en ce que**
   la lumière possède une longueur d'onde de 300 à 400 nm.

3. Procédé selon la revendication 1 ou la revendication 2,
   **caractérisé en ce que**
   la photopolymérisation est amorcée en dessous de 10°C, de préférence en dessous de 0°C.

4. Procédé selon l'une quelconque des revendications 1 à 3,
   **caractérisé en ce que**
   l'agent d'oxydation dans le système redox consiste en un ou plusieurs hydroperoxydes.

5. Procédé selon l'une quelconque des revendications 1 à 4,
   **caractérisé en ce que**
   l'agent de réduction dans le système redox consiste en un ou plusieurs acides sulfiniques ou en leurs sels.

6. Procédé selon l'une quelconque des revendications 1 à 5,
   **caractérisé en ce que**
   le monomère cationique est choisi dans le groupe des (méth)acrylates de N,N-dialkylaminoalkyle et/ou des N,N-dialkylaminoalkyl-(méth)acrylamides sous forme de sel ou sous forme quaternisée, et le monomère non ionogène est choisi dans le groupe de l'acrylamide, du méthacrylamide et des N-alkyl(méth)acrylamides.

7. Procédé selon l'une quelconque des revendications 1 à 6,
   **caractérisé en ce que**
   le procédé est exécuté en continu pour des hauteurs de couche de la solution de monomère de plus de 1 cm, de préférence de plus de 4 cm.

8. Procédé selon l'une quelconque des revendications 1 à 7,
   **caractérisé en ce que**
   le gel aqueux de polymérisat est broyé, retraité et séché après la réaction de polymérisation.

**Claims**

1. Process for preparing high molecular water-soluble polyelectrolytes by adiabatic photopolymerisation of nonionogenic and cationic monomers in aqueous solution in the presence of
   A an initiator which yields free radicals when irradiated with light and
   B a redox system effective as an initiator,
   **characterised in that** the photopolymerisation is initiated by A at temperatures below 20°C and the redox system B is only able to initiate the polymerisation at temperatures higher than or equal to 20°C.

2. Process according to claim 1, **characterised in that** the light has a wavelength of 300 to 400 nm.

3. Process according to claims 1 and 2, **characterised in that** the photopolymerisation is initiated at below 10°C, preferably below 0°C.

4. Process according to claims 1 to 3, **characterised in that** the oxidising agent in the redox system consists of one or more hydroperoxides.

5. Process according to claims 1 to 4, **characterised in that** the oxidising agent in the redox system consists of one or more sulphinic acids or the salts thereof.

6. Process according to claims 1 to 5, **characterised in that** the cationic monomer is selected from among the N,N-dialkylaminoalkyl(meth)acrylates and/or the N,N-dialkylaminoalkyl(meth)acrylamides in the form of a salt or in quaternised form and the nonionogenic monomer is selected from among acrylamide, methacrylamide and the N-alkyl(meth)acrylamides.

7. Process according to claims 1 to 6, **characterised in that** the process is carried out continuously with the monomer solution in a layer more than 1 cm deep, preferably more than 4 cm deep.

8. Process according to claims 1 to 7, **characterised in that** after the reaction of polymerisation the aqueous polymer gel is comminuted, aftertreated and dried.